Europäisches Patentamt

European Patent Office

Office européen des brevets

(11) Publication number: **0 503 104 A1**

# EUROPEAN PATENT APPLICATION

(21) Application number: **91103561.6**

(22) Date of filing: **08.03.91**

(51) Int. Cl.5: **H02K 53/00**

(43) Date of publication of application:
**16.09.92 Bulletin 92/38**

(84) Designated Contracting States:
**AT BE CH DE DK ES FR GB GR IT LI LU NL SE**

(71) Applicant: **Chou, Tien-Fa**
**No. 117, Shan Ting Lane, Shui Li Hsiang**
**Nan Tou Hsien(TW)**

(72) Inventor: **Chou, Tien-Fa**
**No. 117, Shan Ting Lane, Shui Li Hsiang**
**Nan Tou Hsien(TW)**

(74) Representative: **Dickel, Klaus, Dipl.-Ing. et al**
**Julius-Kreis-Strasse 33**
**W-8000 München 60(DE)**

(54) **Structure of rotary mechanism.**

(57) A rotary mechanism comprised of at least a main rotor to carry at least an auxiliary rotor to rotate in reverse direction by means of magnetic attraction and repulsion. The main rotor has a central shaft coupled with a gear engaged with the gear on the central shaft of the auxiliary rotor, and a plurality of magnets made around the periphery thereof and disposed in a predetermined angle from a position in parallel with the periphery thereof to a position in vertical to the periphery thereof to match with the magnets made around and disposed in parallel with the periphery of the auxiliary rotor. A brake means is attached to brake the rotary motion of the rotary mechanism.

EP 0 503 104 A1

## BACKGROUND OF THE INVENTION:

The present invention relates to rotary mechanisms and relates more particularly to a rotary mechanism which utilizes magnetic attraction and repulsion to drive an output shaft to provide rotary power output for driving a small scale of power generator or industrial machinery to operate.

Power supply from all kinds of sources has been continuously developing and utilizing by people to improve human life. In recent decades every country around the world has been trying every possible method to fully utilize water power, wind power as well as solar power because petroleum and other precious natural resources become more difficult to get. However, the use of wind and water power is confined to specific locations or purposes, and solar power is not always available anywhere and anytime.

The present invention has been accomplished under the circumstances in view. It is therefore the main object of the present invention to provide a rotary mechanism which utilizes magnetic attraction and repulsion to force rotors to rotate so as to produce output power through an output shaft. It is still another object of the present invention to provide a rotary mechanism which utilizes a brake magnet controlled to stop the rotary motion of the mechanism.

## BRIEF DESCRIPTION OF THE DRAWINGS:

Fig. 1 illustrates the positioning of the magnets in the main rotor according to the present invention;

Fig. 1-1 illustrates an alternative form of the positioning of the magnets in the main rotor according to the present invention;

Fig. 2 illustrates the effect of magnetic attraction and repulsion between two magnets due to relative position change;

Fig. 2-1 illustrates the acting range of a fixed magnet to a movable magnet;

Fig. 3 illustrates that a movable magnet is forced to make a relative rotary motion due to angular position change of the fixed magnet;

Figs. 4, 4-1, 4-2 and 4-3 illustrate a cycle of rotary motion between the main and the auxiliary rotors;

Fig. 5 illustrates a curve showing a complete cycle of rotary motion between the main and the auxiliary rotors;

Fig. 6 is a longitudinally cross-sectional view of a main rotor according to the present invention;

Fig. 6-1 is a transversely cross-sectional view of a main rotor according to the present invention;

Fig. 7 is a longitudinally cross-sectional view of an auxiliary rotor according to the present invention;

Fig. 7-1 is a transversely cross-sectional view of an auxiliary rotor according to the present invention;

Fig. 8 illustrates a first preferred embodiment of the present invention in which two auxiliary rotors are coupled to a main rotor;

Fig. 9 illustrates the shape and arrangement of the magnets used in the main rotor as well as the auxiliary rotors;

Fig. 10 illustrates an alternate form of the present invention in which a plurality of main and auxiliary rotor combination sets are connected through series connection;

Fig. 11 illustrates still another alternate form of the present invention in which a plurality of main and auxiliary rotor combination sets are connected through parallel connection;

Fig. 12 illustrates a brake means in a rotary mechanism according to the present invention;

Fig. 13 illustrates an alternate form of the brake means;

Fig, 13-1 illustrates that the brake means is rotated to a braking position to stop the rotation of the rotary mechanism; and

Fig. 13-2 illustrates that the brake means is rotated to a releasing position permitting the rotary mechanism to keep rotating.

## DETAILED DESCRIPTION OF THE PREFERRED EMBODIMENT:

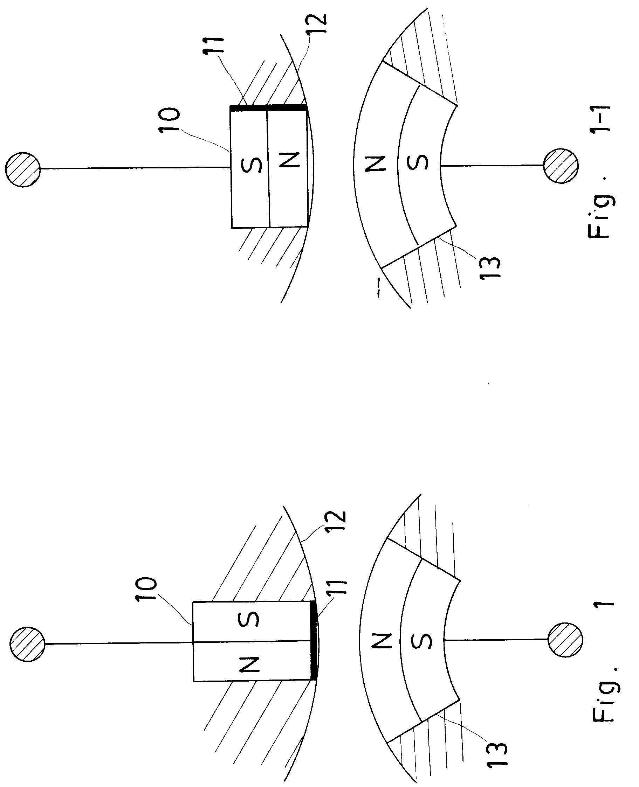

Figs. 1 and 1-1 illustrate the positioning of the magnet in main rotor relative to the magnet in auxiliary rotor. In Fig. 1, the magnet 10 of the main rotor which is disposed at a location relative to the magnet 13 of the auxiliary rotor has an acting face 11 disposed in parallel with the circumference 12 of the main rotor, while in Fig. 1-1 the acting face 11 of the magnet 10 of the main rotor is disposed in 90° angle relative to the circumference 12 of the main rotor. Therefore, the acting face 11 of the magnet 10 of the main rotor can be defined within 90° angle from the area in parallel with the circumference 12 to the area in vertical to the circumference 12 and fixedly disposed at an angle of inclination according to circumferential ratio between the main rotor and the auxiliary rotor.

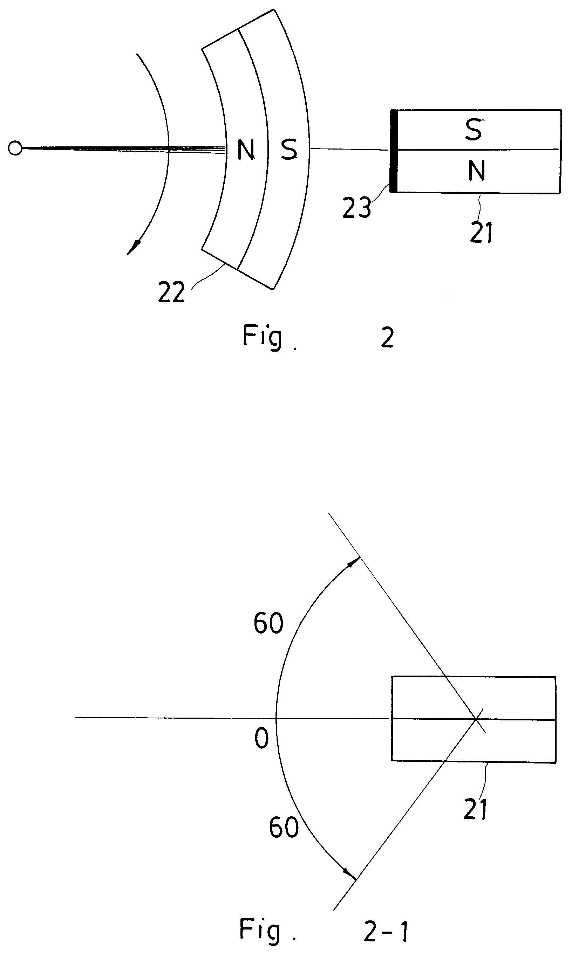

Referring to Figs. 2 and 2-1, there is illustrated an arrangement of magnets according to the present invention. In this arrangement, when the fixed magnet 21 is rotated from a horizontal position to a vertical position relative to the movable magnet 22, the acting face 23 of the fixed magnet 21 forces the movable magnet 22 to move in one direction due to the effect of magnetic attraction or repulsion. On the other hand, when the direction of polarity of either magnet is changed, the moving direction of the movable magnet 22 is changed too. As shown in Fig. 2-1, the active range of the magnetic field in which the movable magnet 22 can be forced to move is defined within 120° angle or within 60° angle of inclination from either side of the central axis of the fixed magnet 21.

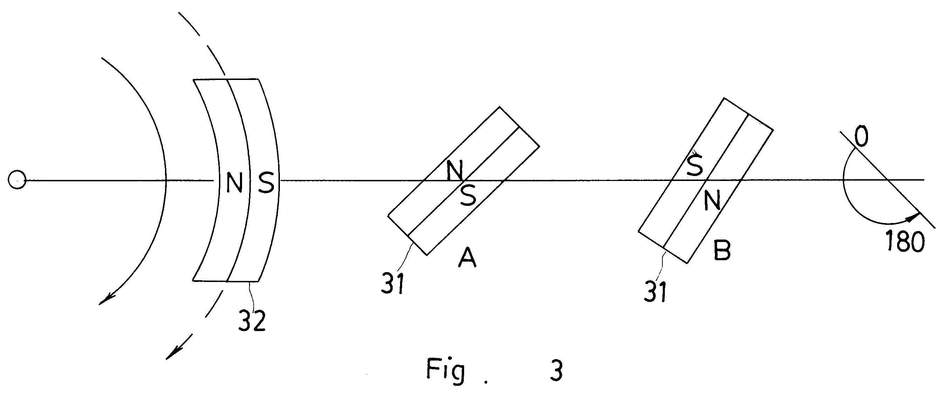

Referring to Fig. 3, there is illustrated another arrangement of magnets according to the present invention. In this arrangement, when the fixed magnet 31 is rotated from angle A to angle B, the movable magnet 32 is forced to make a relative rotary motion.

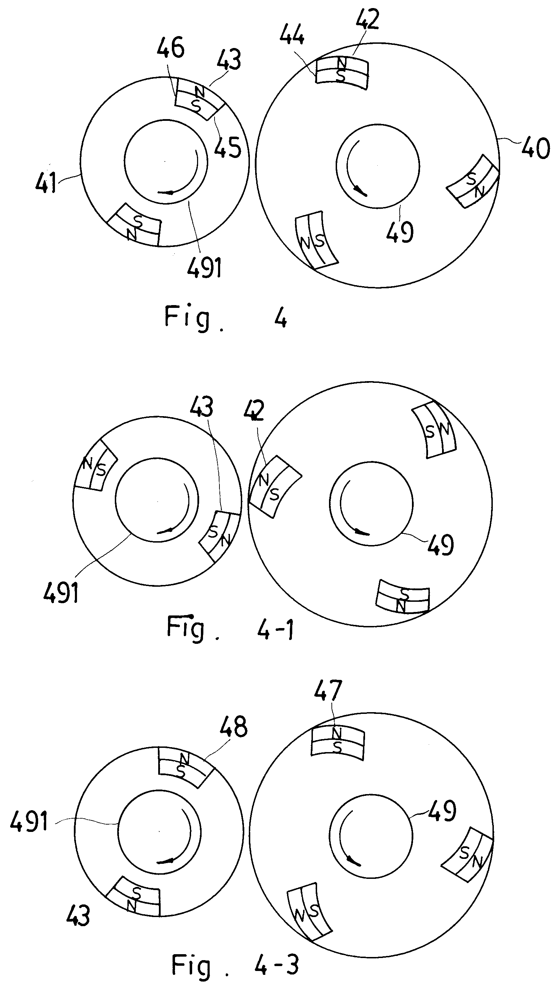

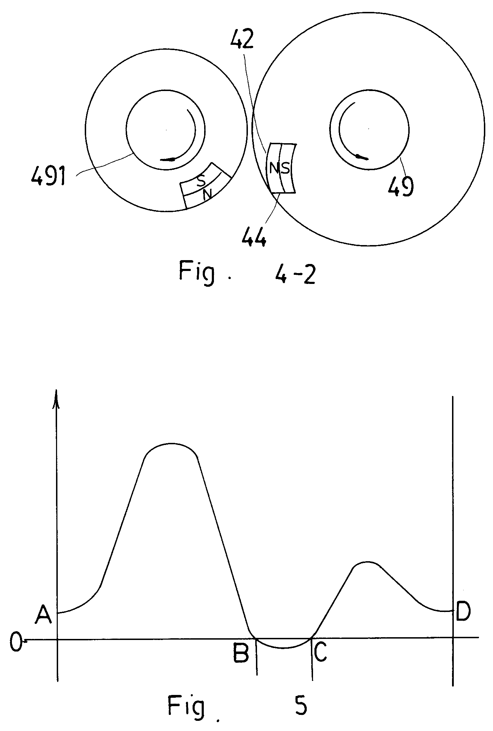

Figs. 4, 4-1, 4-2 and 4-3 illustrate applications of the aforesaid principles. The main rotor 40 and the auxiliary rotor 41 are engaged by gears (not shown) to rotate in reverse direction, wherein the magnets in the main rotor 40 are fixedly set in a predetermined angle of inclination relative to the circumference of the main rotor 40; the magnets in the auxiliary rotor 41 are respectively set in parallel with the circumference of the auxiliary rotor 41; the range between the magnets and the circumference of the main rotor 40 is equal to the range between the magnets and the circumference of the auxiliary rotor 41; and the magnets of the main rotor 40 do not match the magnets of the auxiliary rotor 41 when they are rotated to the closest position relative to each other (as shown in Fig. 4-1, either magnet of the main rotor 40 comes after either magnet of the auxiliary rotor 41). Therefore, when the magnet 43 of the auxiliary rotor 41 comes into the acting range of the magnet 42 of the main rotor 40, the front acting face 44 of the magnets 43 pushes the repulsion face 45 of the magnets 43 of the auxiliary rotor 41 to rotate toward the direction of the attraction face 46 thereof. At the same time, magnetic attraction between the two magnets 42 and 43 causes the two magnets 42 and 43 to move from a farthest position relative to each other as shown in Fig. 4 to a closest position as shown in Fig. 4-1. Because the two magnets 42 and 43 are respectively fastened in two rotors of different diameter, the relative angle position between the two magnets 42 and 43 is simultaneously changed during rotary motion which is caused by magnetic attraction. This angle position change between the two magnets 42 and 43 keeps the rotary motion going and the gyroscopic force is continuously changing. When the two magnets 42 and 43 are rotated to the position in Fig. 4-1, the gyroscopic force from magnetic attraction is gradually disappeared, however, inertia effect keeps forcing the two magnets 42 and 43 to respectively rotate for a short range and reach a position shown in Fig. 4-2. When the magnet 42 of the main rotor 40 is rotated to the position shown in Fig. 4-2, the front acting face 44 of the magnet is immediately changed into a repulsion face. Because the two magnets 42 and 43 are respectively rotated out of the shortest line between the shaft 49 of the main rotor 40 and the shaft 491 of the auxiliary rotor 41, the force of magnetic repulsion between the two magnets 42 and 43 forces the two magnets 42 and 43 to rotate continuously respectively. At the same time, other two magnets 47 and 48 are rotated to the position where the magnets 42 and 43 are originally located. Thus, one cycle of rotary motion is accomplished and, a next cycle starts. The basic structure of the present invention is to arrange magnets respectively in two different rotors to produce magnetic attraction, magnetic repulsion and inertia force so as to achieve rotary motion.

Fig. 5 illustrates the rotary motion of Figs. 4 through 4-3 in curve, wherein the segment of curve between point A to point B represents the rotary motion from Fig. 4 to Fig. 4-1 caused by pull force; the segment of curve between point B to point C represents the rotary motion from Fig. 4-1 to Fig. 4-2 caused by inertia force; the segment of curve between point C to point D represents the rotary motion from Fig. 4-2 to Fig. 4-3 causes by push force.

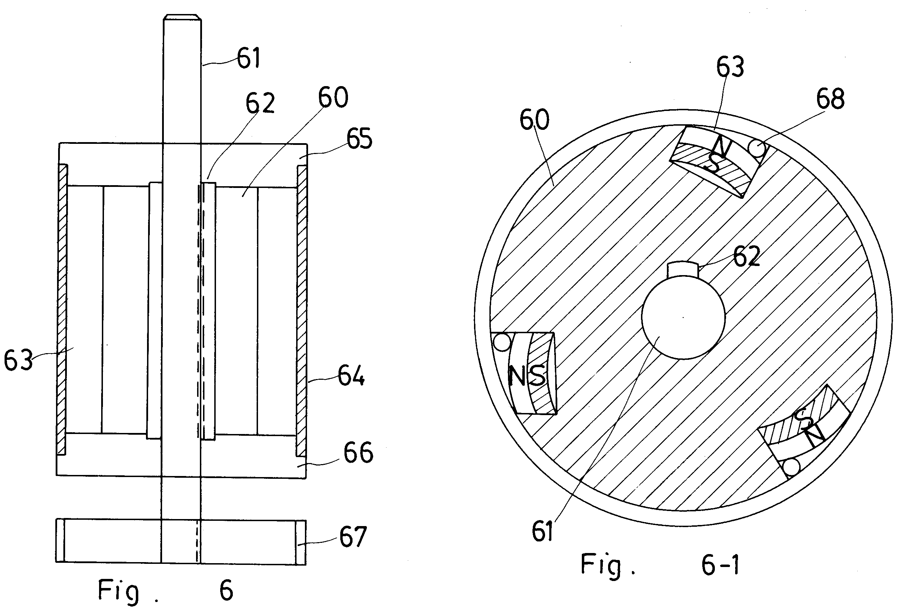

Referring to Figs. 6 and 6-1, a main rotor in accordance with the present invention is comprised of a cylindrical magnet mounting seat 60 made of non magnet-conductive material, having a central shaft 61 through the central axis thereof and locked in position by a key 62, a plurality of magnets 63 made around the periphery thereof at equal interval and respectively disposed in a predetermined angle relative to said periphery, which magnets 63 are respectively fastened in position by a plug means 68 each and covered by a covering 64 each which covering 64 has two opposite ends covered with caps 65 and 66, and a gear 67 mounted on said central shaft 61 at one end which gear 67 has a diameter equal to said cylindrical magnetic mounting seat 60.

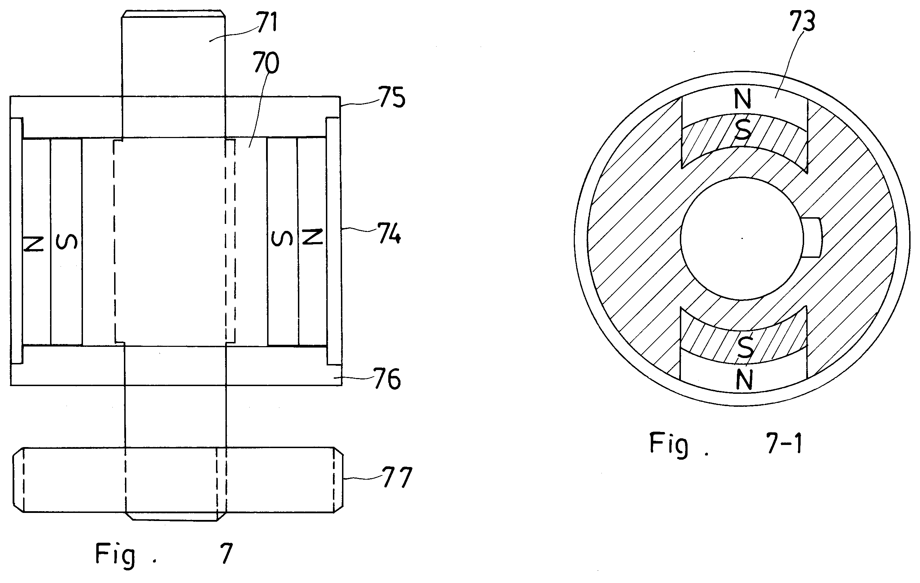

Referring to Figs. 7 and 7-1, an auxiliary rotor in accordance with the present invention is substantially similar to the structure of the main rotor, comprised of a cylindrical magnet mounting seat 70 having a central shaft 71 coupled with a gear 77 and a plurality of magnets 73 respectively covered with a covering 74 each which has two opposite ends covered with caps 75 and 76. Unlike the magnets 63 in the main rotor, the magnets 73 are respectively disposed in parallel with the periphery of the cylindrical magnet mounting seat 70.

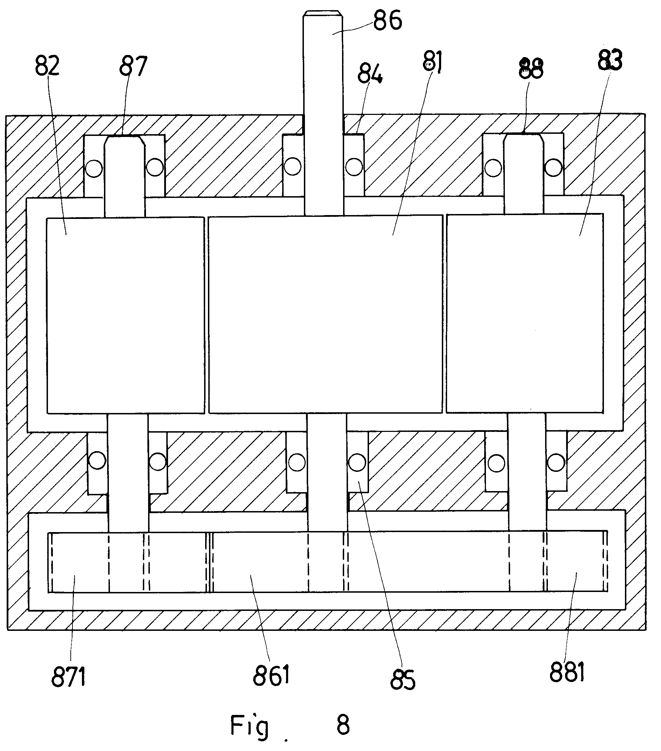

Fig. 8 illustrates a preferred embodiment of rotary mechanism according to the present invention in which two auxiliary rotors are coupled to a main rotor. As illustrated, the central shafts 86, 87 and 88 of the main rotor 81 and the auxiliary rotors 82 and 83 are each mounted with two bearings 84 and 85 at the two opposite ends thereof, the gears 861, 871 and 881 of the central shafts 86, 87 and 88 of the rotors 81, 82 and 83 are respectively made in suitable size to respectively engage together for power transmission.

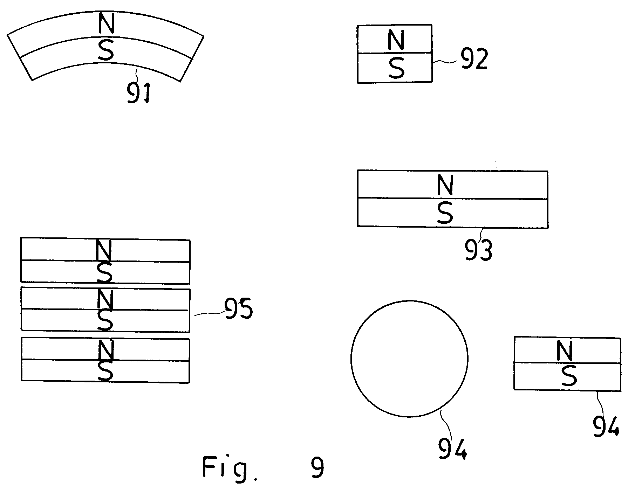

Referring to Fig. 9, the magnets in the main rotor as well as either auxiliary rotor can be made in arched shape 91, square shape 92, rectangular shape 93 or cylindrical shape 94, or a plurality of magnets may be superimposed together 95. In any arrangement, the magnets in the main rotor as well the auxiliary rotor shall have the same magnetic polarity disposed outwards.

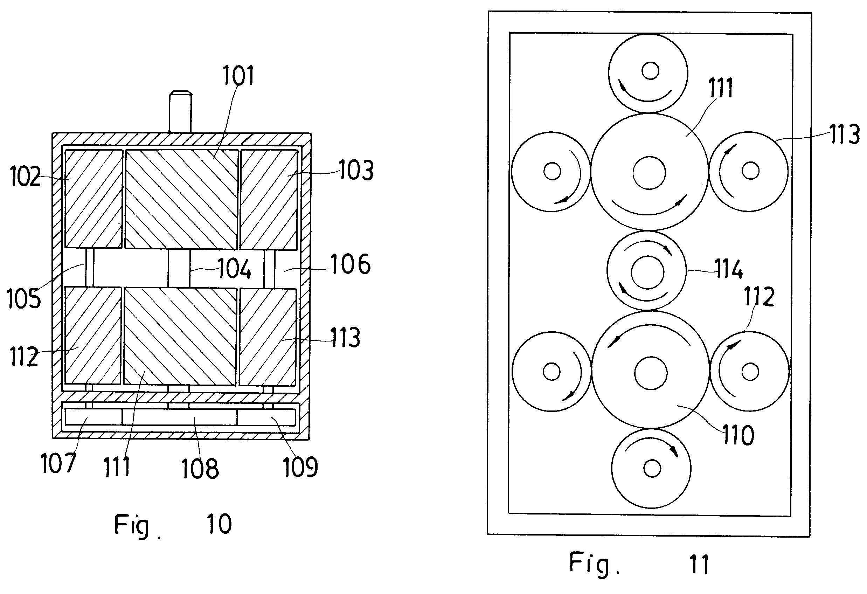

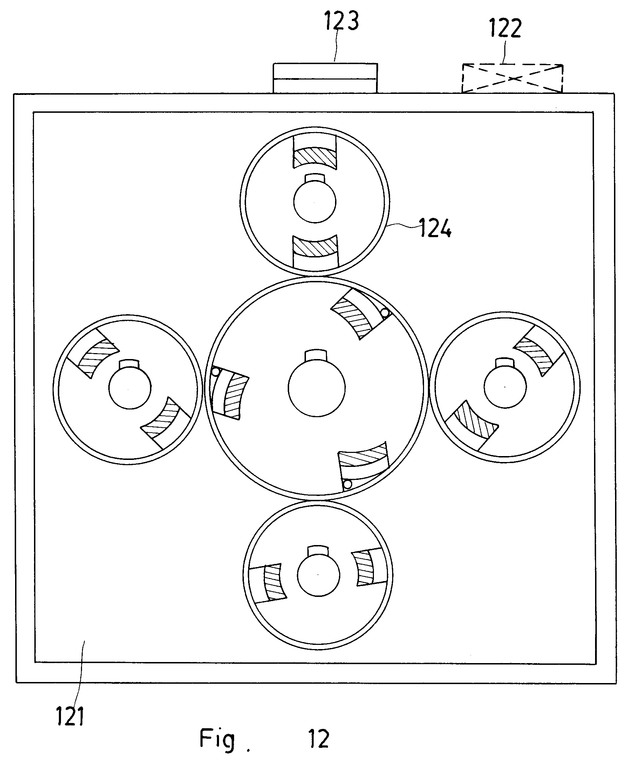

A plurality of main and auxiliary rotor combination sets may be connected together through series connection as shown in Fig. 10 or parallel connection as shown in Fig. 11. In Fig. 10, the main rotors 101 and 111 are respectively connected in series by the same central shaft 104, the auxiliary rotors 102, 112 and 103, 113 are respectively connected in series by the central shafts 105 and 106, and the gear 108 of the central shaft 104 is engaged with the gears 107 of the central shaft 105 and the gear 109 of the central shaft 106. In Fig. 11, two main rotors 110 and 111 are respectively engaged with respective set of auxiliary rotors 112 or 113 and linked by a common auxiliary rotor 114.

A brake magnet may be attached to a rotary mechanism according to the present invention so that a rotary mechanism can be utilized for industrial purpose. As shown in Fig. 12, a movable magnet is attached to a rotary mechanism 121 at the outside at position 122 which may be moved to a position 123 externally aligned with the main or auxiliary rotor 124 therein to stop the rotary motion of the rotary mechanism by means of magnetic attraction. When the movable magnet is moved back to original position 122, the rotary mechanism 121 is released from magnetic attraction and allowed to keep rotating.

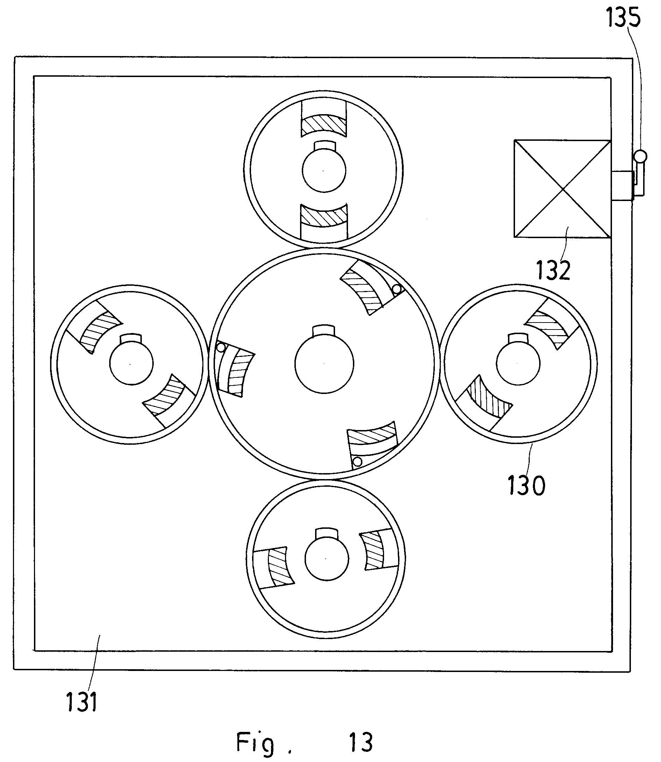

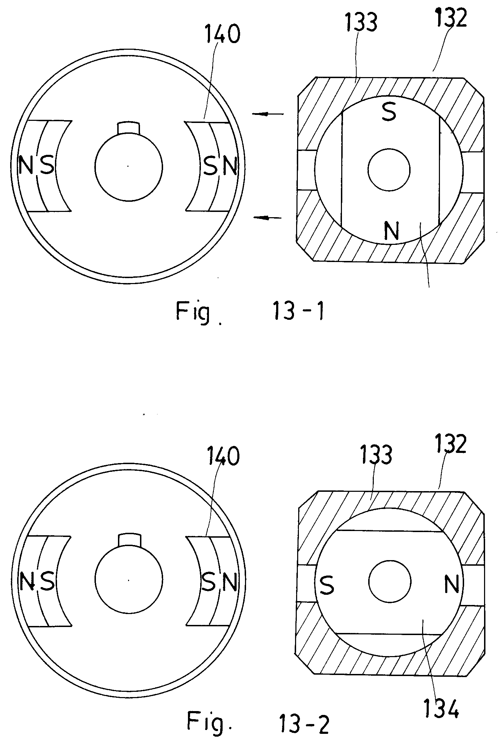

Referring to Figs. 13, 13-1 and 13-2, there is illustrated an alternate form of brake means according to the present invention. As illustrated, a brake means 132 is fastened in a rotary mechanism 131 at a suitable location which comprised a magnet 134 covered in an iron covering 133 and controlled by a handle 135 to rotate within 90° angle relative to the rotary mechanism 131. When the handle 135 is rotated downward to a position shown in Fig. 13-1, the relative magnetic field between the magnet 140 of the auxiliary rotor 130 and the magnet 134 of the brake means 132 forces the auxiliary rotor 130 to stop the rotary mechanism 131 from rotating. When the handle 135 is pushed upwards to a position shown in Fig. 13-2, magnetic field from auxiliary rotor is stopped from releasing outwards due to change of direction of magnetic flux, and therefore, the rotary mechanism 131 is permitted to rotate continuously.

Further, a braking disc may be respectively attached to the power output shaft of the rotors of the rotary mechanism for braking control. However, in either type of brake means, the magnetic field of each rotor is respectively disposed at different acting range of pull force or push force when braking action is released from the rotary mechanism and therefore, each rotor is permitted to rotate again.

## Claims

1. A rotary mechanism alternative forced by means of push and pull force to rotate continuously, comprising at least a main rotor to carry at least an auxiliary rotor to rotate in reverse direction; wherein:

   said main rotor comprises a cylindrical magnet mounting seat made of non magnet-conductive material, having a central shaft disposed through the central axis thereof, a plurality of magnets made around the periphery thereof at equal interval, which magnets being respectively covered by a covering each which covering having two opposite ends covered with a cap each, said central shaft having one end coupled with a gear and an opposite end forming into an output end; and

   said auxiliary rotor comprising a cylindrical magnet mounting seat having a central shaft disposed through the central axis thereof, which central shaft having one end coupled with a gear engaged with the gear on the central shaft of said main rotor and an opposite end coupled with a bearing or forming into an output end, a plurality of magnets made around the periphery thereof at equal interval which magnets being respectively covered by a covering each which covering having two opposite ends respectively covered with a cap each.

2. A rotary mechanism according to claim 1, wherein one single main rotor is used to match with one or a plurality of auxiliary rotors equidistantly disposed around and coupled to said main rotor, and the outer diameter of said main rotor is equal or larger than said auxiliary rotors.

3. A rotary mechanism according to claim 1, wherein one single auxiliary rotor is used to match with one or a plurality of auxiliary rotors equidistantly disposed around and coupled to said auxiliary rotor.

4. A rotary mechanism according to claim 1, wherein the magnets in said main rotor are respectively made around the periphery of said main rotor at equal interval and disposed in an angle of inclination within 90 relative to the periphery thereof; the magnets in said auxiliary rotor are respectively made around the periphery of said auxiliary at equal internal and disposed in parallel with the periphery thereof.

5. A rotary mechanism according to claim 1, wherein the range from the central point of each magnet in said main rotor to the periphery of said main rotor is equal to the range from the central point of each magnet in said auxiliary rotor to the periphery of said auxiliary rotor.

6. A rotary mechanism according to claim 1, wherein the magnets in said main rotor as well as said auxiliary rotor have each the same magnetic polarity disposed outwards.

7. A rotary mechanism according to claim 1, wherein the number as well as the size of the magnets in said main rotor should be at least equal to the number and the size of the magnets in said auxiliary rotor.

8. A rotary mechanism according to claim 1, wherein the magnets in said main and auxiliary rotors may be respectively formed of a single or a plurality of magnetic elements superimposed together, said magnetic elements being respectively made in either arched, square, rectangular or cylindrical shape and fastened in position with the same magnetic polarity disposed outwards.

9. A rotary mechanism according to claim 1, which is comprised of a plurality sets of main and auxiliary rotors respectively connected through either series, parallel or series and parallel connection.

10. A rotary mechanism according to claim 1, which further comprises a brake means to stop the rotary mechanism from rotary motion, said brake means comprising at least a brake disc mounted on the output end of the central shaft of said main or auxiliary rotor.

11. A rotary mechanism according to claim 10, wherein said brake means is a brake magnet movably mounted on the rotary mechanism at the outside and moved to stop the rotary mechanism from rotary motion.

12. A rotary mechanism according to claim 10, wherein said brake means is comprised of a magnet controlled by a handle to change the polarity thereof for stopping the rotary mechanism from rotating.

Fig.  1

Fig.  1-1

EP 0 503 104 A1

Fig. 2

Fig. 2-1

Fig. 3

Fig. 4

Fig. 4-1

Fig. 4-3

Fig . 4 -2

Fig . 5

Fig. 6-1

Fig. 6

N S

71
70
75
74
76

N S

77

Fig .        7

73
N
S
S
N

Fig .        7-1

Fig. 8

Fig. 9

Fig. 11

Fig. 10

Fig.    12

Fig. 13

Fig. 13-1

Fig. 13-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y<br>A | EP-A-0 256 132 (MINATO KOHEI)<br>* page 1, line 4 - page 3, line 11; figures 1,2 * | 1-3,5-8<br>,10,4,9<br>,11,12 | H 02 K 53/00 |
| Y,A | EP-A-0 168 712 (REBOLINI GIORGIO)<br>* page 2, line 21 - page 5, line 13; figures * | 4,9,1 | |
| X | PATENT ABSTRACTS OF JAPAN vol. 11, no. 20 (E-472)(2467) January 20, 1987 & JP-A-61 191 279 (YOSHIRO NAKAMATSU ) August 25, 1986<br>* the whole document * | 1-3,5-8 | |
| X | PATENT ABSTRACTS OF JAPAN vol. 11, no. 4 (E-468)(2451) January 7, 1987 & JP-A-61 180 569 (HIROAKI OMI ) August 13, 1986<br>* the whole document * | 1-3,5-8 | |
| A | SCIENTIFIC AMERICAN January 1968, NEW YORK, US pages 114 - 122; STANLEY W. ANGRIST: 'Perpetual motion machines '<br>* the whole document * | 1 | TECHNICAL FIELDS SEARCHED (Int. Cl.5)<br><br>H 02 K<br>H 02 N |

The present search report has been drawn up for all claims

| Place of search | Date of completion of the search | Examiner |
|---|---|---|
| THE HAGUE | 11-10-1991 | ZANICHELLI F. |